# FASCICULE DE BREVET EUROPEEN

(11) **EP 1 642 460 B1**
(45) Date de publication et mention de la délivrance du brevet: **16.09.2020**
(21) Numéro de dépôt: 04767870.1
(22) Date de dépôt: 02.07.2004
(51) Int. Cl.: H04N 21/462

(54) **PROCÉDÉ ET RECEPTEUR POUR LA CONSTITUTION DE LISTES DE SERVICES FAVORIS**
VERFAHREN UND EMPFÄNGER ZUR ERSTELLUNG VON LISTEN MIT FAVORISIERTEN DIENSTEN
METHOD AND RECEIVER FOR GENERATION OF LISTS OF FAVOURITE SERVICES

(30) Priorité: 03.07.2003 FR 0308082
(43) Date de publication de la demande: 05.04.2006
(73) Titulaire: InterDigital Madison Patent Holdings, 75017 Paris (FR)
(72) Inventeur: FRALEU, Sébastien, 35530 Noyal sur Vilaine (FR); MAGRAS, André, 35760 ST Grégoire (FR); QUERE, Thierry, 35160 Monfort sur Meu (FR)
(74) Mandataire: Huchet, Anne
(86) Numéro de dépôt international: PCT/FR2004/050309
(87) Numéro de publication internationale: WO 2005/006755

(56) Documents cités:
- WO-A-99/35841
- WO-A-99/66721

## Description

L'invention porte sur un procédé pour constituer une liste de services favoris dans un décodeur de services numériques audio et/ou vidéo maintenant en mémoire une liste des services disponibles sous la forme d'une liste globale
identifiant chaque service disponible.

Un service disponible est un programme qu'un décodeur numérique, après installation dans une zone géographique déterminée, peut effectivement
décoder et présenter à l'utilisateur. Ce dernier sélectionne le service qu'il souhaite visionner soit directement dans la liste globale, soit dans une de ses listes de services favoris (sous-ensemble de la liste globale).

On entend par identifiants de service le n-uplet d'information permettant d'indentifier de façon unique un service numérique diffusé. Dans le cas de la norme DVB (norme « ETSI EN 300 468 - Digital Video Broadcasting ; Spécification for Service Information (SI) in DVB systems»), chaque service est identifié par son triplet d'identifiants DVB : le « Original Network Id » (identifiant du réseau d'origine - un même service pouvant être retransmis sur plusieurs résèaux), le « Transport Stream Id » (identifiant du flux de transport) et le « Service Id » (identifiant du service). De même dans le cas du système DSS (acronyme de « Digital Satellite System » ) le « Channel number » et l'identifiant de sa table PTC (acronyme de « Physical Transmission Channel ») définissent un service.

L'offre de services numériques audio et/ou vidéo (TV, radio, Programmes interactifs) proposée aux utilisateurs par les opérateurs de diffusion (CanalSAT, TPS, BLOOMBERG, ect... ) est de plus en plus grande et ceci d'autant plus qu'un décodeur numérique peut être relié à des antennes pointant sur plusieurs satellites de diffusion de services numériques. Un décodeur numérique est actuellement capable de gérer environ 5000 services numériques. Il en résulte pour l'utilisateur un besoin d'organiser de manière pratique les services disponibles sous forme d'une ou plusieurs listes de services favoris.

Jusqu'à présent, pour constituer une liste de services favoris, l'utilisateur fait défiler, à l'aide d'une télécommande, la liste globale des services disponibles maintenue en mémoire dans le décodeur et pointe manuellement un à un chaque service qu'il désire faire entrer dans la liste de services favoris.
Ce processus de constitution d'une liste de services favoris est long et pénible ce qui le rend de plus en plus inadapté à l'évolution croissante de l'offre de services. Document WO 99/35841 décrit un système de gestion de listes de chaînes favorites basé sur des événements se produisant sur des chaînes. Les listes de chaînes favorites ont une durée de validité lié à la durée de validité de ces événements et doivent être mise à jour fréquemment. Document WO 99/66721 décrit la limitation de bande passante pour la transmission de données EPG.

L'invention a pour but de palier l'inconvénient indiqué ci-dessus.

L'idée à la base de l'invention est de proposer à l'utilisateur une aide pour la constitution automatique de la liste de services favoris par l'entrée, par exemple à l'aide d'une télécommande1 d'au moins un critère de sélection dans le décodeur qui correspond dans sa forme la plus simple à un type de service
(par exemple: «Sport», « Cinéma », « Info » ), à un public concerné (par exemple: « Enfant», «Adulte», « Homme », « Femme » ), à la langue utilisée (par exemple: « français », « anglais »), à l'embrouillage (par exemple: « clair », « embrouillé » ), etc.... La liste de services favoris ainsi constituée comprend l'ensemble des services issus de la liste globale répondant à ce critère.

L'invention est défini par les revendications indépendantes.

La première liste peut par exemple être déterminée, si l'implémentation est effectuée dans le cadre du DVB, à partir de tables diffusées dites 'NIT' (tables de description de réseau). D'autres tables peuvent être utilisées. La seconde liste peut avantageusement être transmise dans une section privée d'un flux multiplexé MPEG ou être téléchargée à partir d'un serveur au travers d'un réseau auquel est connecté le récepteur, typiquement un réseau téléphonique ou câble.

Le procédé peut en outre comprendre une étape consistant à établir une correspondance entre une description d'un critère de sélection, entrée par l'utilisateur, et au moins un critère de sélection mémorisé dans la seconde liste grâce à une table de critères contenant le nombre de critères de sélection possibles et une description de tous les critères de sélection.

Le critère de sélection pourra être simple ou plus structuré en fonction des champs de critère de sélection qui auront été prévus dans la table de description des services. Par exemple, si la table de description des services comporte deux champs de critère de sélection correspondant par exemple respectivement à un type de service («Sport», «Cinéma», « Info ») et à un type de public(« Enfant», «Adulte», «Homme», «Femme»), un critère de sélection structuré pourra consister dans la sélection des services « Cinéma » ET «Enfant». Le critère de sélection entré à l'étape (a) peut notamment être une combinaison logique de critères de sélection contenus dans la table des critères.

Le procédé peut également comprendre une étape de construction automatique d'au moins une liste de services favoris à partir de critères de sélection par défaut contenus dans une table de critères par défaut.

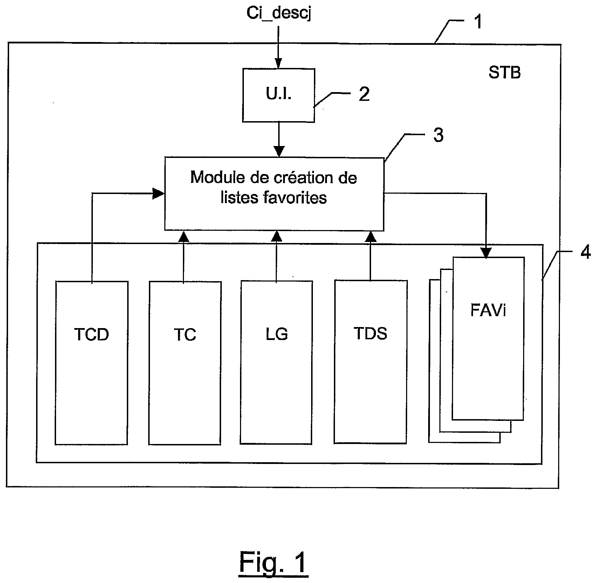

Le procédé selon l'invention est décrit ci-après et illustré sur la figure unique (Fig. 1) qui représente de façon schématique un décodeur numérique STB.

La figure 1 illustre les éléments nécessaires à la compréhension de l'invention dans un décodeur numérique STB 1. Le décodeur 1 contient classiquement une liste globale des services numériques disponibles accessibles par le décodeur. Cette liste est contenue dans une mémoire 4 du décodeur 1 sous la forme d'une liste globale LG identifiant chaque service disponible par un n-uplet d'identifiants. A chaque n-uplet d'identifiants peut s'ajouter une autre information comme le nom du service. Toutefois, pour constituer une liste de services favoris, l'utilisateur a besoin d'information discriminantes de plus haut niveau caractérisant chaque service. Ces informations discriminantes sont par exemple :
- le type d'émission diffusée : généraliste, sport, cinéma, jeunesse, information, ...
- le public visé par l'émission diffusée : tout public, adolescents, enfants, adultes, hommes, femmes, ...
- le cryptage : clair, embrouillé,
- la langue de l'émission diffusée : anglais, français, ...
- etc.

Selon l'invention, ces informations discriminantes sont stockées dans des champs d'une Table de Description des Services (TDS) en correspondance avec des n-uplets d'identifiants de services numériques, pour servir de critères de sélection lors de la constitution d'une liste de services favoris par l'utilisateur. Cette table TDS, stockée dans la mémoire 4 du décodeur, peut être rendue accessible au décodeur depuis un canal de réception de services numériques ou depuis une connexion Internet sur un serveur distant. La table TDS peut encore être embarquée dans le décodeur lors de sa fabrication (on prévoit dans ce cas avantageusement une possibilité de mise à jour de la table TDS, par exemple via une connexion à un serveur distant). Cette table TDS est conçue pour recenser à priori tous les services numériques accessibles dans une certaine zone géographique (ou l'union de plusieurs zones connexes) où le décodeur est sensé être installé. Par exemple, en France, un décodeur peut s'installer aujourd'hui sur « TPS » et/ou « CanalSAT » et/ou « ViaDigital ». La table TDS pour un tel décodeur installé en France recensera donc tous les services numériques de « TPS », « CanalSAT » et « ViaDigital ».

Dans le cas de la norme DVB précitée, les identitifiants de services sont un triplet de valeurs (« Original Network Id » - « Transport Stream Id » - « Service lid ») qui sont codées sur 6 octets. Si nous supposons, dans un mode de réalisation non optimisé, que les informations discriminantes ou critères de sélection peuvent être codés sur 2 octets, alors la taille de la Table TDS non optimisée sera au maximum de 40 koctets pour recenser 5000 services numériques.

De manière plus avantageuse, on peut opter pour le format optimisé suivant dans le cas de la norme DVB :

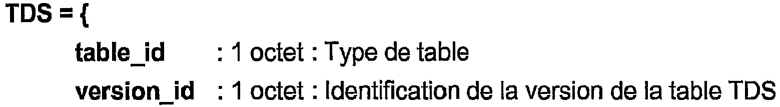

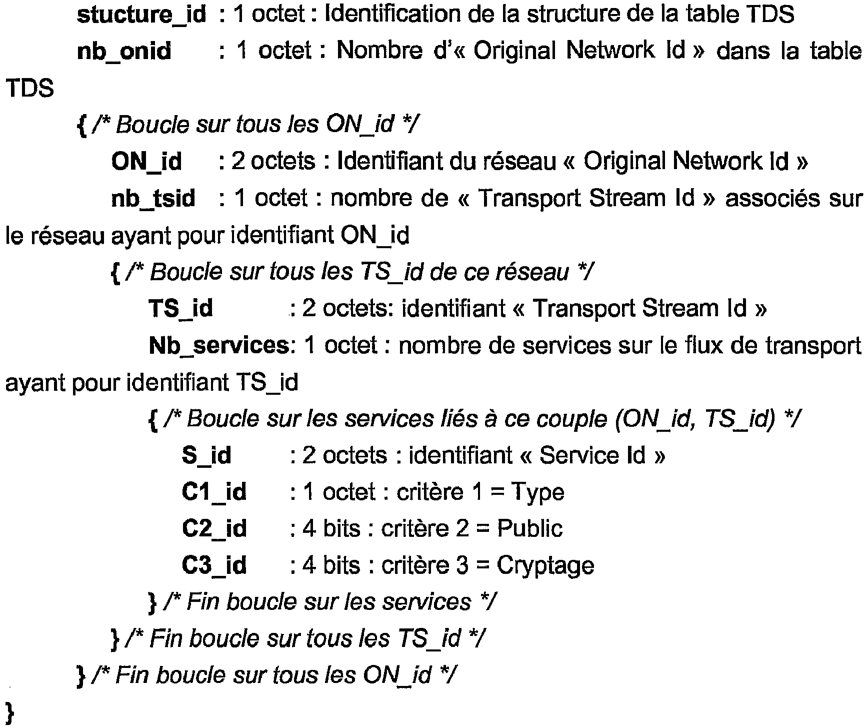

Avec cette structure optimisée, pour 5000 services diffusés sur 10 réseaux (ON_id), à raison de 25 flux de transport (TS_id) par réseau et de 20 services (S_id) par flux de transport (valeurs données à titre indicatif), la taille de la TDS sera de : 4 + 10 x (3 + 25 x (2 + 1 + 20 x (2 + 2))), soit 20 784 octets (à comparer au 40 000 octets requis en utilisant un format non-optimisé).

Le champ **stucture_id** permet de définir différentes structures de tables TDS. On peut imaginer des structures simples (de taille réduite) pour des transmissions à faible débit et des décodeurs bas coût et des structures évoluées portant un grand nombre de critères pour les décodeurs plus hauts de gamme.

Dans notre cas nous supposons que le champ **stucture_id** a une valeur telle que la table TDS contient les champs suivants pour définir les critères de sélection des services :
- **C1_id** = Type, pouvant prendre l'une des valeurs suivantes { 1 : « Sport », 2 : « Cinéma », 3 : « Info »}
- **C2_id =** Public, pouvant prendre l'une des valeurs suivantes { 1 : « Adulte », 2 : « Enfant », 3 : « Femme » }
- **C3_id =** Cryptage, pouvant prendre l'une des valeurs suivantes { 1 : « clair », 2 : « embrouillé »}.

La correspondance entre la valeur du critère et sa chaîne de caractère (par exemple entre 0x01 et « sport ») se fait via une autre table que nous appellerons Table des Critères TC qui est également mémorisée dans la mémoire 4 du décodeur 1.

Cette table TC est par exemple définie par la structure suivante :

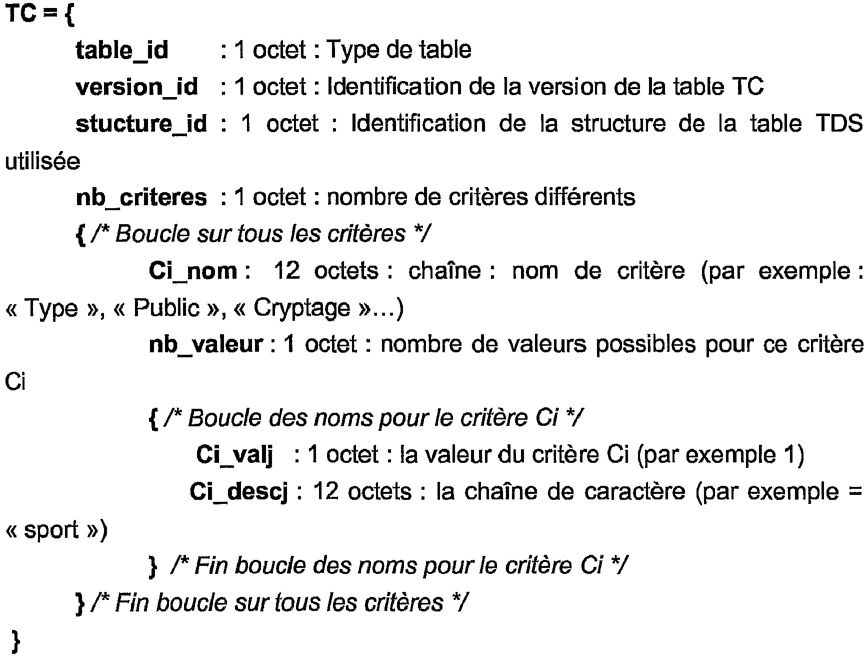

Selon l'invention il est possible de gérer dynamiquement le nombre de critères et les noms attribués à ces critères via la Table des Critères TC. Cette table TC fait la correspondance entre la valeur numérique du champ de « Type », de « Public », de « Cryptage », etc ... utilisé dans la Table de Description des Services TDS et la chaîne de caractère qui dénomme ce critère. Cette Table des Critères TC est de la même manière que la table TDS diffusée, téléchargeable ou embarquée. Il est possible alors de remettre à jour les critères utilisés dans le décodeur numérique 1.

Pour constituer une liste de services favoris FAVi, l'utilisateur entre au moins un critère de sélection prédéterminé **Ci_descj** par l'intermédiaire d'un module d'interface utilisateur UI 2 du décodeur 1. Le critère de sélection peut porter sur un type de service, un public concerné par le service, la langue du service, le cryptage, etc. dès lors que le critère de sélection est une information discriminante faisant partie d'un champ de la Table de Description des Services TDS. En réponse à l'entrée du critère de sélection, un module logiciel 3 de création des listes favorites situé dans le décodeur est prévu pour récupérer de la table TDS les identifiants (par exemple les triplets DVB) répondant au critère de sélection entré dans le décodeur et pour croiser les identifiants de la liste globale LG avec les identifiants récupérés de la TDS pour constituer la liste de services favoris FAVi correspondants au critère de sélection entré dans le décodeur.

Le critère de sélection peut être simple ou plus structuré selon les capacités d'interprétation du module logiciel 3. En particulier, il est concevable que le critère de sélection soit une combinaison de plusieurs critères utilisant des opérateurs logiques ET/OU ... etc.

Par exemple, on peut définir le critère complexe suivant :
CC1_val = 2 **et** (2 **ou** 3) **et** 1.

Avec la valeur de **structure_id** choisie plus haut, ce critère complexe correspond à la sélection des chaînes :
de type « Cinéma » (qui vaut 2 comme C1_id de description de type) **et;**
de public « Enfant » (qui vaut 2 comme C2_id de description de public) **ou** de public « Femme » (qui vaut 3 comme C2_id de description de public) **et;**
de cryptage «en clair » (qui vaut 1 comme C3_id de description de cryptage).

Selon un mode de réalisation préféré de l'invention, le décodeur 1 après installation, propose la construction automatique d'un certain nombre de listes de services favoris à partir d'une Table de Critères par Défaut (TCD) contenue dans la mémoire 4 du décodeur 1, par croisement avec la liste des services disponibles (LG). Cette table TCD contient un sous-ensemble des critères autorisés par les informations contenues dans la table TDS. Cette table des critères par défaut (TCD) est soit téléchargée, soit embarquée dans le décodeur lors de sa fabrication. Après cette initialisation automatique, l'utilisateur peut alors modifier le nombre de listes de services favoris, leurs noms, leurs contenus et leurs critères de sélection respectifs à l'aide de l'interface utilisateur 2 et du module de création des listes favorites 3.

La structure de la table TCD est par exemple la suivante :

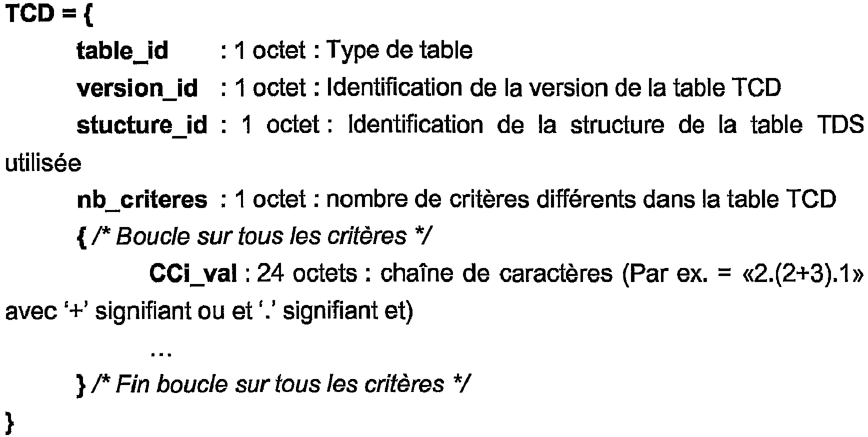

Le champ **structure_id** doit être identique pour les trois tables de sorte à assurer une cohérence entre les données des différentes tables. Le décodeur STB 1 supporte une valeur de **structure_id** donnée et donc ne prend en compte que les tables, télédiffusées et/ou téléchargées, comportant cette valeur de **structure_id.** Les trois tables TDS, TC et TCD comportent chacune un numéro de version qui change à chaque mise à jour du contenu de ces tables (défini dans le champ **version_id**)**.** Aussi est-il possible des les modifier et de les mettre à jour. Lorsqu'une mise à jour est nécessaire, l'opérateur de diffusion des services fournit une nouvelle valeur de **version_id** qui est soit télédiffusée à destination de tous les décodeurs, soit mise à disposition sur un serveur de mise à jour auquel les décodeurs peuvent se connecter pour obtenir un téléchargement de la valeur de **version_id.** Chaque décodeur compare alors la valeur de **version_id** de chacune des tables TDS, TC et TCD qu'il a en mémoire 4 avec la valeur de **version_id** des tables télédiffusées et/ou mises à disposition et ayant le même **structure_id** que le décodeur. En cas de différence, le décodeur remplace le contenu des anciennes tables stockées en mémoire avec le contenu des nouvelles.

Bien entendu, après qu'une liste de services favoris FAVi est constituée, elle est sauvegardée dans la mémoire 4 du décodeur 1 de sorte que l'utilisateur peut toujours la modifier en utilisant les fonctionnalités de base disponibles classiquement sur les décodeurs. De plus, les critères de sélection peuvent également être appliqués à une liste de services autre que la liste globale des services LG, par exemple à une autre liste de services favoris FAVi construite au préalable, pour construire une nouvelle liste de services favoris FAVj avec des critères plus restrictifs.

## Revendications

1. Procédé pour constituer une liste de chaînes favorites (FAVi) dans un récepteur (1) adapté pour recevoir des chaînes numériques audio et/ou vidéo, le procédé étant mis en œuvre dans ledit récepteur et comportant les étapes pour :
(a) récupérer, d'une première source d'information, une première liste de chaînes disponibles (LG) dans laquelle chaque chaîne possède un identifiant de chaîne unique ;
(b) récupérer, d'une seconde source d'information, une seconde liste de chaînes (TDS) comportant pour chaque chaîne l'identifiant de chaîne unique et de l'information discriminante caractérisant chaque chaîne dans la seconde liste ;
(c) déterminer un sous-ensemble de la seconde liste de chaînes en fonction d'au moins un critère de sélection basé sur ladite information discriminante caractérisant chaque chaîne dans la seconde liste ;
(d) créer ladite liste de chaînes favorites à partir des chaînes communes entre la première liste de chaînes disponibles et le sous-ensemble de la seconde liste de chaînes, les chaînes en commun étant identifiés par leur identifiant de chaîne.

2. Procédé selon la revendication 1, dans lequel la première liste de chaînes est une liste des chaînes disponibles dans les flux numériques effectivement reçus par le récepteur.

3. Procédé selon l'une des revendications 1 ou 2 **caractérisé en ce que** la seconde liste comprend au moins les chaînes potentiellement recevables par le récepteur et **en ce que** la première liste est un sous-ensemble de la seconde liste.

4. Procédé selon l'une des revendications 1 à 3, **caractérisé en ce que** le critère de sélection de l'étape (b) est un critère de sélection ou une combinaison logique de critères de sélection rentrés par un utilisateur sur la base des critères de la seconde liste.

5. Procédé selon l'une des revendications 1 à 3, **caractérisé en ce que** l'étape (c) comporte une étape pour déterminer un critère par défaut ou d'une combinaison logique de critères de sélection par défaut (TCD).

6. Procédé selon la revendication 5, **caractérisé en ce que** les étapes (c) et (d) sont répétées pour plusieurs critères de sélection par défaut ou combinaisons logiques de critères de sélection par défaut pour créer une pluralité de listes de chaînes favorites par défaut.

7. Procédé selon l'une des revendications 1 à 6, **caractérisé en ce que** la seconde liste est:
- transmise par diffusion sur un canal susceptible d'être reçu par le récepteur (1) ;
- accessible dans le récepteur (1) par téléchargement depuis un serveur distant; ou
- embarquée dans le récepteur.

8. Procédé selon l'une des revendications 1 à 7, **caractérisé en ce que** la première liste est extraite de tables de description de flux comprises dans le ou les flux effectivement reçus par le récepteur, lesdites tables de description de flux indiquant les chaînes diffusées dans le ou les flux reçus.

9. Procédé selon l'une des revendications 1 à 8, **caractérisé par** une étape de mise à jour d'au moins une parmi la première et la seconde liste par diffusion dans un flux susceptible d'être reçu par le décodeur ou par téléchargement depuis un serveur.

10. Récepteur de chaînes numériques audio et/ou vidéo, le récepteur comprenant :
des moyens de récupération, d'une première source d'information, d'une première liste de chaînes disponibles (LG) dans laquelle chaque chaîne possède un identifiant de chaîne unique ;
- des moyens de récupération, d'une seconde source d'information, d'une seconde liste de chaînes comportant pour chaque chaîne l'identifiant de chaîne unique et de l'information discriminante caractérisant chaque chaîne dans la seconde liste ;
- des moyens pour déterminer un sous-ensemble de la seconde liste de chaînes en fonction d'au moins un critère de sélection basé sur ladite information discriminante caractérisant chaque chaîne dans la seconde liste ;
- des moyens de création d'une liste de chaînes favorites (3) à partir des chaînes communes entre la première liste de chaînes disponibles et le sous-ensemble de la seconde liste de chaînes, les chaînes en commun étant identifiés par leur identifiant de chaîne.

11. Récepteur selon la revendication 10, dans lequel la première liste de chaînes est une liste des chaînes disponibles dans les flux numériques effectivement reçus par le récepteur.

12. Récepteur selon l'une des revendications 10 ou 11, **caractérisé en ce que** la seconde liste comprend au moins les chaînes potentiellement recevables par le récepteur et **en ce que** la première liste est un sous-ensemble de la seconde liste.

13. Récepteur selon l'une des revendications 10 à 12, **caractérisé en ce que** le critère de sélection est un critère de sélection ou une combinaison logique de critères de sélection rentrés par un utilisateur sur la base des critères de la seconde liste.

14. Récepteur selon l'une des revendications 10 à 12, **caractérisé en ce que** la détermination d'un sous-ensemble comporte une détermination d'un critère par défaut ou d'une combinaison logique de critères de sélection par défaut (TCD).

15. Récepteur selon la revendication 14, **caractérisé en ce que** les moyens pour déterminer et les moyens de création sont appliqués pour plusieurs critères de sélection par défaut ou combinaisons logiques de critères de sélection par défaut pour créer une pluralité de listes de chaînes favorites par défaut.

## Patentansprüche

1. Verfahren zur Erstellung einer Liste mit favorisierten Sendern (FAVi) in einem Empfänger (1), der geeignet ist, um digitale Audio- und/oder Videosender zu empfangen, wobei das Verfahren in dem besagten Empfänger umgesetzt wird und die Schritte umfasst für:
(a) das Abrufen, aus einer ersten Informationsquelle, einer ersten Liste mit verfügbaren Sendern (LG), in welcher jeder Sender eine einzigartige Senderkennung besitzt;
(b) das Abrufen, aus einer zweiten Informationsquelle, einer zweiten Liste mit Sendern (TDS), die für jeden Sender die einzigartige Senderkennung und unterscheidende Information, die jeden Sender in der zweiten Liste charakterisiert, umfasst;
(c) die Festlegung einer Untergruppe der zweiten Liste mit Sendern in Abhängigkeit von mindestens einem Auswahlkriterium, das auf der besagten unterscheidenden Information, die jeden Sender in der zweiten Liste charakterisiert, basiert;
(d) die Erstellung der besagten Liste mit favorisierten Sendern anhand der gemeinsamen Sender aus der ersten Liste mit verfügbaren Sendern und der Untergruppe der zweiten Liste mit Sendern, wobei die gemeinsamen Sender durch ihre Senderkennung identifiziert werden.

2. Verfahren nach Anspruch 1, in welchem die erste Liste mit Sendern eine Liste der Sender ist, die in den von dem Empfänger tatsächlich empfangenen digitalen Strömen verfügbar sind.

3. Verfahren nach einem der Ansprüche 1 oder 2, **dadurch gekennzeichnet, dass** die zweite Liste mindestens die von dem Empfänger potentiell empfangbaren Sender umfasst, und dadurch, dass die erste Liste eine Untergruppe der zweiten Liste ist.

4. Verfahren nach einem der Ansprüche 1 bis 3, **dadurch gekennzeichnet, dass** das Auswahlkriterium des Schritts (b) ein Auswahlkriterium oder eine logische Kombination von Auswahlkriterien, die von einem Nutzer auf der Grundlage der Kriterien der zweiten Liste eingegeben wurden, ist.

5. Verfahren nach einem der Ansprüche 1 bis 3, **dadurch gekennzeichnet, dass** der Schritt (c) einen Schritt zur Festlegung eines Standardkriteriums oder einer logischen Kombination von Standard-Auswahlkriterien (TCD) umfasst.

6. Verfahren nach Anspruch 5, **dadurch gekennzeichnet, dass** die Schritte (c) und (d) für mehrere Standard-Auswahlkriterien oder logische Kombinationen von Standard-Auswahlkriterien wiederholt werden, um eine Vielzahl von Standard-Listen mit favorisierten Sendern zu erstellen.

7. Verfahren nach einem der Ansprüche 1 bis 6, **dadurch gekennzeichnet, dass** die zweite Liste:
- durch Aussendung auf einem Kanal, der geeignet ist, um von dem Empfänger (1) empfangen zu werden, übertragen wird;
- in dem Empfänger (1) durch Herunterladen von einem Fernserver zugänglich ist; oder
- in dem Empfänger eingebettet ist.

8. Verfahren nach einem der Ansprüche 1 bis 7, **dadurch gekennzeichnet, dass** die erste Liste aus Tabellen zur Beschreibung von Strömen, die in dem oder den von dem Empfänger tatsächlich empfangenen Strom oder Strömen enthalten sind, extrahiert wird, wobei die besagten Tabellen zur Beschreibung von Strömen die Sender angeben, die in dem oder den empfangenen Strom oder Strömen ausgesendet werden.

9. Verfahren nach einem der Ansprüche 1 bis 8, **gekennzeichnet durch** einen Schritt zur Aktualisierung von mindestens einer der ersten und der zweiten Liste durch Aussendung in einem Strom, der geeignet ist, von dem Decoder oder durch Herunterladen von einem Server empfangen zu werden.

10. Empfänger von digitalen Audio- und/oder Videosendern, wobei der Empfänger umfasst:
- Mittel zum Abrufen, aus einer ersten Informationsquelle, einer ersten Liste mit verfügbaren Sendern (LG), in welcher jeder Sender eine einzigartige Senderkennung besitzt;
- Mittel zum Abrufen, aus einer zweiten Informationsquelle, einer zweiten Liste mit Sendern, die für jeden Sender die einzigartige Senderkennung und unterscheidende Information, die jeden Sender in der zweiten Liste charakterisiert, enthält;
- Mittel zur Festlegung einer Untergruppe der zweiten Liste mit Sendern in Abhängigkeit von mindestens einem Auswahlkriterium, das auf der besagten unterscheidenden Information, die jeden Sender in der zweiten Liste charakterisiert, basiert;
- Mittel zur Erstellung einer Liste mit favorisierten Sendern (3) anhand der gemeinsamen Sender aus der ersten Liste mit verfügbaren Sendern und der Untergruppe der zweiten Liste mit Sendern, wobei die gemeinsamen Sender durch ihre Senderkennung identifiziert werden.

11. Empfänger nach Anspruch 10, in welchem die erste Liste mit Sendern eine Liste der Sender, die in den von dem Empfänger tatsächlich empfangenen digitalen Strömen verfügbar sind, ist.

12. Empfänger nach einem der Ansprüche 10 oder 11, **dadurch gekennzeichnet, dass** die zweite Liste mindestens die von dem Empfänger potentiell empfangbaren Sender umfasst, und dadurch, dass die erste Liste eine Untergruppe der zweiten Liste ist.

13. Empfänger nach einem der Ansprüche 10 bis 12, **dadurch gekennzeichnet, dass** das Auswahlkriterium ein Auswahlkriterium oder eine logische Kombination von Auswahlkriterien, die von einem Nutzer auf der Grundlage der Kriterien der zweiten Liste eingegeben wurden, ist.

14. Empfänger nach einem der Ansprüche 10 bis 12, **dadurch gekennzeichnet, dass** die Festlegung einer Untergruppe eine Festlegung eines Standardkriteriums oder einer logischen Kombination von Standard-Auswahlkriterien (TCD) umfasst.

15. Empfänger nach Anspruch 14, **dadurch gekennzeichnet, dass** die Mittel zur Festlegung und die Mittel zur Erstellung für mehrere Standard-Auswahlkriterien oder logische Kombinationen von Standard-Auswahlkriterien angewendet werden, um eine Vielzahl von Standard-Listen mit favorisierten Sendern zu erstellen.

## Claims

1. Method for creating a list of favourite channels (FAVi) in a receiver (1) designed for receiving digital audio and/or video channels, the method being implemented in said receiver and comprising steps to:
(a) retrieve, from a first source of information, a first list of available channels (LG) wherein each channel has a unique channel identifier;
(b) retrieve, from a second source of information, a second list of channels (TDS) comprising for each channel the unique channel identifier and the discriminating information characterising each channel in the second list;
(c) determine a sub-set of the second list of channels according to at least one selection criterion based on said discriminating information characterising each channel in the second list;
(d) create said list of favourite channels from common channels between the first list of available channels and the sub-set of the second list of channels, the common channels being identified by their channel identifier.

2. Method according to claim 1, wherein the first list of channels is a list of channels available in the digital streams actually received by the receiver.

3. Method according to one of claims 1 or 2, **characterised in that** the second list comprises at least the channels potentially receivable by the receiver and **in that** the first list is a sub-set of the second list.

4. Method according to one of claims 1 to 3, **characterised in that** the selection criterion of step (b) is a selection criterion or a logical combination of selection criteria entered by a user based on the criteria of the second list.

5. Method according to one of claims 1 to 3, **characterised in that** step (c) comprises a step to determine a default criterion or a logical combination of default selection criteria (TCD).

6. Method according to claim 5, **characterised in that** steps (c) and (d) are repeated for several default selection criteria or logical combinations of default selection criteria to create a plurality of lists of default favourite channels.

7. Method according to one of claims 1 to 6, **characterised in that** the second list is:
- sent by broadcasting on a channel that is likely to be received by the receiver (1);
- available in the receiver (1) by downloading from a remote server;
or
- embedded in the receiver.

8. Method according to one of claims 1 to 7, **characterised in that** the first list is extracted from stream description tables comprised in the stream or streams actually received by the receiver, said stream description tables indicating the channels broadcast in the stream or streams received.

9. Method according to one of claims 1 to 8, **characterised by** an upgrade step of at least one from the first and second list by broadcasting in a stream likely to be received by the set-top box or by downloading from a server.

10. Receiver of audio and/or video digital channels, the receiver comprising:
- means of retrieval, from a first source of information, of a first list of available channels (LG) wherein each channel has a unique channel identifier;
- means of retrieval, from a second source of information, of a second list of channels comprising for each channel the unique channel identifier and the discriminating information characterising each channel in the second list;
- means for determining a sub-set of the second list of channels according to at least one selection criterion based on said discriminating information characterising each channel in the second list;
- means for creating a list of favourite channels (3) from common channels between the first list of available channels and the sub-set of the second list of channels, the common channels being identified by their channel identifier.

11. Receiver according to claim 10, wherein the first list of channels is a list of channels available in the digital streams actually received by the receiver.

12. Receiver according to one of claims 10 or 11, **characterised in that** the second list comprises at least the channels potentially receivable by the receiver and **in that** the first list is a sub-set of the second list.

13. Receiver according to one of claims 10 to 12, **characterised in that** the selection criterion is a selection criterion or a logical combination of selection criteria entered by a user based on the criteria of the second list.

14. Receiver according to one of claims 10 to 12, **characterised in that** the determination of a sub-set comprises a determination of a default criterion or a logical combination of default selection criteria (TCD).

15. Receiver according to claim 14, **characterised in that** the means for determining and the creation means are applied for several default selection criteria or logical combinations of default selection criteria to create a plurality of lists of default favourite channels.
